Europäisches Patentamt

European Patent Office

Office européen des brevets

(19)

(11) Publication number: **0 363 340**
A2

(12) **EUROPEAN PATENT APPLICATION**

(21) Application number: 89850329.7

(22) Date of filing: 04.10.89

(51) Int. Cl.5: **F24F 12/00 , F24F 5/00 , F24H 3/06**

(30) Priority: 06.10.88 SE 8803548
25.11.88 SE 8804265

(43) Date of publication of application:
**11.04.90 Bulletin 90/15**

(84) Designated Contracting States:
**AT BE CH DE ES FR GB GR IT LI LU NL SE**

(71) Applicant: **Persson, Sixten**
**Hälsingegatan 11**
**S-113 23 Stockholm(SE)**

(72) Inventor: **Persson, Sixten**
**Hälsingegatan 11**
**S-113 23 Stockholm(SE)**

(74) Representative: **Nyberg, Bengt**
**CARMINGER, UUSITALO & NYBERG**
**Patentbyra AB P.O. Box 19055**
**S-104 32 Stockholm(SE)**

(54) **Method and device for conditioning supply air.**

(57) A method for conditioning supply air in respect of its temperature in a recuperative heat exchanger (63) through which the supply air and exhaust air flow in heat-exchanging relation comprises supplying water to vertical walls of exhaust air flow passages (74) of the heat exchanger when cooling of the supply air is required and heating the exhaust air by means of a burner (87), preferably a gas burner, immediately adjacent the inlet of the exhaust air flow passages (74) when heating of the supply air is required. A recuperative heat exchanger (63) for carrying the method into effect comprises means for providing a flowing film of water on the walls defining flow passages (74) for the exhaust air and a burner (87) for heating the exhaust air immediately adjacent the inlet end of these flow passages.

FIG. 6

FIG. 7

EP 0 363 340 A2

## Method and device for conditioning supply air

This invention is concerned with conditioning or treatment of air and more particularly relates to a method and a device for conditioning the supply air in a ventilating or air conditioning system in respect of its temperature.

It is well known in ventilating or air conditioning systems to recover heat from the exhaust air and utilize it for heating the supply air. Such heating is accomplished by means of a recuperative heat exchanger having two separate groups of flow passages, one group for the supply air and the other for the exhaust air. The flow passages of the first group alternate with the flow passages of the second group and are separated from them by thin heat-conductive walls. When the exhaust air is warmer than the supply air, it gives up heat to the supply air through the walls separating the heat exchanger passages.

It is also well known, albeit seldom carried out in actual practice, to cool the supply air by humidifying the exhaust air before it passes through the heat exchanger. The exhaust air is thus cooled and in turn cools the supply air in the heat exchanger.

In accordance with the present invention, which has for one of its objects to provide an improved method and device for conditioning supply air in respect of its temperature, cooling of the exhaust air is effected by supplying water direct to the group of flow passages through which the exhaust air passes. Preferably, the water is supplied in such a manner that it forms a substantially continuous flowing film of water covering substantially the entire surface area of the walls defining the flow passages for the exhaust air.

Excess water emerging from the exhaust air flow passages may be collected and recirculated to the inlet of the exhaust air flow passages. Alternatively, excess water may be spread over the roof of a building housing an air conditioning unit which includes the heat exchanger.

In addition to an efficient cooling of the exhaust air, and thus of the supply air, the water supplied in the aforesaid manner has the very advantageous effect of keeping the walls of the exhaust air passages clean so that accumulation of dirt and the resultant reduction of the efficiency of the heat transfer are avoided. In case of fire, the water protects the heat exchanger against overheating and resultant malfunction.

During certain periods, especially during the winter or cold season, it may be desirable to heat the supply air to a temperature higher than that which can be brought about solely by heat recovery from the exhaust air. In known air conditioning devices, the additional heating is often accomplished by means of an electric heater which is positioned in the supply air duct downstream of the heat exchanger and which is energised during the periods when the additional heating is required.

However, it is not always feasible or convenient to use electrical energy for the additional heating.

A further object of the invention is to provide a method for effecting the additional heating in a simple and efficient manner without resorting to electrical energy and also to provide a device for carrying the method into effect.

To this end, in accordance with the invention, the exhaust air is heated immediately before it enters the exhaust air flow passages of the heat exchanger, the heating being effected by means of a burner, preferably a gas burner.

The additional heating of the supply air is thus brought about by heating the exhaust air by means of a burner before the exhaust air is brought into heat-exchange relation with the supply air in the heat eaxchanger. Because the ducts and flow passages for the exhaust air are entirely separated from those for the supply air, there is no danger of the supply air becoming contaminated with the combustion gases or products.

Further features of the method and device of the invention are set forth in the claims and the following detailed description of embodiments with reference to the accompanying drawings.

Fig. 1 is a diagrammatic elevational view, partly in vertical section, of an air conditioning unit embodying the invention;

Fig. 2 is a plan view of the air conditioning unit of Fig. 1;

Fig. 3 is a diagrammatic enlarged view in section taken on line III-III of Fig. 1 of the recuperative heat exchanger of the air conditioning unit of Figs. 1 and 2;

Fig. 4 is a still further enlarged end view of one of a plurality of heat exchanger plates or cassettes of the heat exchanger of Fig. 3;

Fig. 5 is a diagrammatic illustration of a second embodiment of an air conditioning unit of the invention;

Figs. 6 and 7 are diagrammatic vertical sectional views of lu the heat exchanger of the unit shown in Fig. 5, the sections being taken in planes respectively transverse and parallel to the flow passages of the heat exchanger.

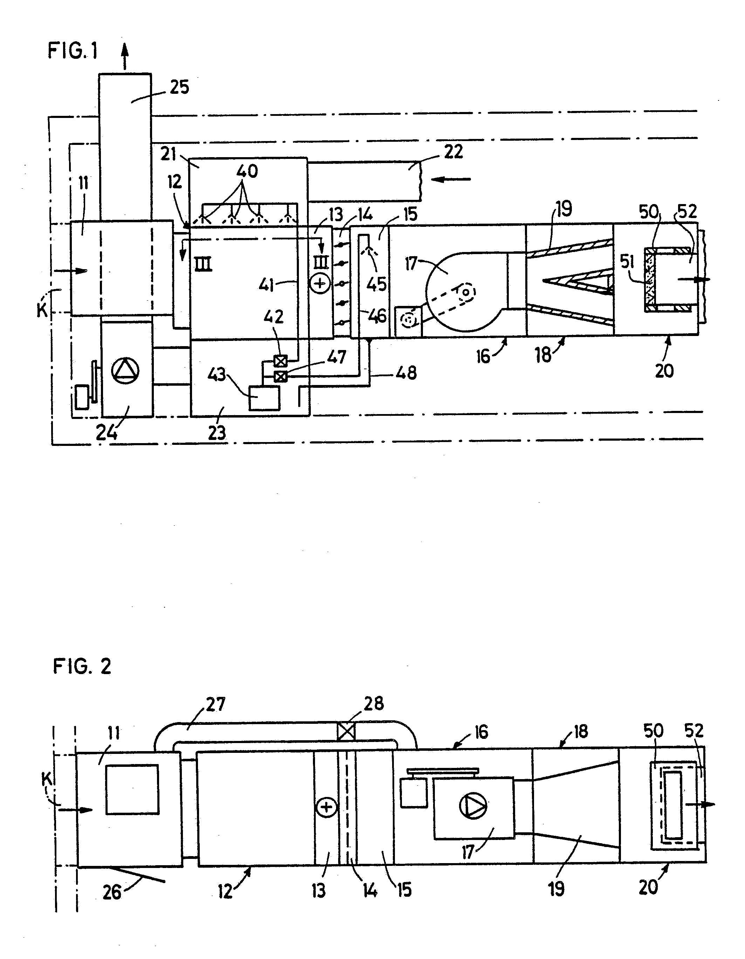

The illustrated air conditioning unit is intended for supplying conditioned air to apartments or to office or industrial premises and may be installed e.g. in an enclosed space on the roof of the building containing the apartments or premises. Boundaries of such a space are indicated in phantom lines in Fig. 1.

Referring to Figs. 1-4, outside air to be processed so as to be suitable for use as supply air enters the just-mentioned space through an intake opening K in one of the walls of the space and enters an intake and inspection section 11 of the air conditioning unit. This section constitutes the first part of the unit as viewed in the direction of flow in the supply air system, i.e. from the left to the right in Figs. 1 and 2.

The intake and inspection section 11 is followed by a plate heat exchanger 12 of the cross-flow type through the supply air flow passages of which the intake air flows horizontally; details of this heat exchanger are described below. Then there follows an electric heater 13 for additional heating of the air emerging from the supply air flow passages of the heat exchanger (normally, such additional heating is required only during the cold season). The heater 13 is followed by a damper section 14 for closing off the supply air system, a humidifier 15, a supply air fan section 16 comprising a supply air fan 17, and finally a sound absorber and filter section 18 comprising a sound absorber 19 and a filter 20 which can be switched on and off.

Apart from the heat exhanger 12 with its exhaust air flow passages, through which the exhaust air flows vertically, the exhaust air system comprises an inlet hood or box 21 positioned at the top of the heat exchanger. The inlet box 21 is adapted at one vertical wall thereof to be connected to an exhaust air duct section 22 and is adapted at its underside to be in open communication with vertical exhaust air flow passages of the heat exchanger.

Other parts of the exhaust air system include a collecting box 23, which is positioned at the bottom of the heat exhanger and is in constant open communication with the exhaust air flow passages of the heat exchanger, and an exhaust air fan 24, the suction side of which is connected to the collecting box 23 and the pressure side of which is connected to an exhaust air duct section 25 passing through the intake and inspection section 11 such that heat exchange may take place between the exhaust air and the air flowing through the intake and inspection section to the heat exchanger 12.

The intake and inspection section 11, which has an inspection door 26, is connected direct to the fan section 16 by means of a by-pass duct 27 provided with a damper 28 so that, if desired, at least a portion of the outside air may temporarily be passed direct to the supply air fan. This can be done to bring about a temporary reduction of the efficiency of the heat exchanger and thereby reduce the danger of freezing during conditions of low outside temperatures or to counteract an undesirable elevation of the temperature of the supply air.

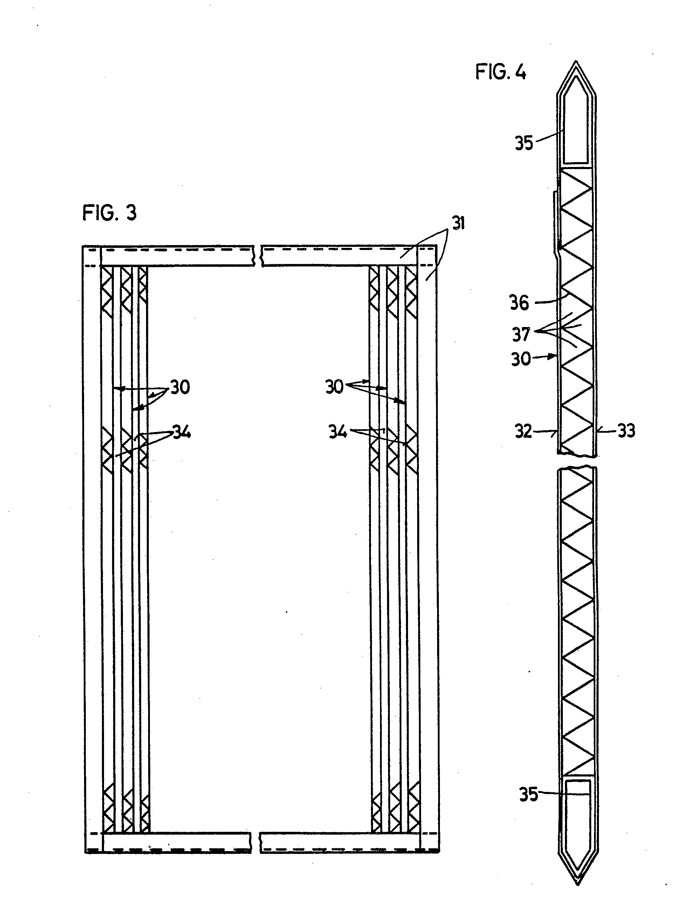

Figs. 3 and 4 illustrate the details of the heat-transferring elements of the heat exchanger 12.

A number of plate-like flat cassettes 30 are positioned side by side to form a stack. Fig. 4 shows one such cassette viewed from the intake and inspection section 11. The cassettes are arranged in vertical position in a frame 31, with adjacent cassettes spaced apart by a predetermined distance. The outer sides of the smooth flat sheet metal walls 32, 33 of the cassettes define a multiplicity of vertical exhaust air flow passages 34 which are of uniform width throughout their height (as measured vertically in Fig. 2) and length (as measured horizontally in Fig. 2) and have smooth flat lateral surfaces.

As shown in Fig. 4, the walls 32, 33 of each cassette 30 are formed of a single sheet metal strip which is folded about a pair of tubular profile members 35 at the upper and lower cassette edges and the ends of which overlap on one side of the cassette. A folded or corrugated sheet metal strip 36 positioned between the cassette walls 32, 33 is coextensive with the cassette in the horizontal direction and extends from one of the tubular profile members 35 to the other. The supply air flow passages are formed by the horizontally smooth passages 37 which are defined by the folded sheet metal strip 36 on the one hand and the inner side of the cassette walls 32, 33 on the other hand.

The overlapping end portions of the sheet metal strip forming the cassette walls 32, 33 are adhesively joined together throughout the overlap area. Moreover, the sheet metal strip, on the one hand, and the tubular profile members 35 and the folded sheet metal strip, on the other hand, as well as the frame 31 and the stack of cassettes are adhesively joined together. Preferably, a polyurethane adhesive is used for accomplishing the adhesive joints.

Because of the illustrated and described design of the cassettes 30 and the adhesive joints, the heat exchanger can readily be assembled in such a manner that there is substantially no overflow of air from the exhaust air passages 34 to the supply air passages 37 and, consequently, no contamination of the supply air by the exhaust air. Because the surfaces of the heat exchanger are smooth in the direction of flow, there is no need for any special measures for keeping the supply air passages clean in operation, in spite of the absence of a supply air filter on the intake side. It has been found that the heat exchanger can be in operation for very long periods of time (several years) without appreciable deposits of dirt being formed on the walls of the supply air passages. Normally, the exhaust air is more heavily contaminated with dust than the outside air, but because the surfaces defining the exhaust air flow passages 34 are also smooth, these surfaces can also be kept clean in a simple and economical manner, as is explained below.

Mounted within the inlet box 21 of the heat exchanger 12 are a group of spray nozzles 40 connected to a feed conduit 41 including an electrically operated valve (solenoid valve) 42. The nozzles are positioned such that they spray finely divided water over substantially the entire cross-sectional flow area of the exhaust air flow passages to humidify the exhaust air and provide a downwardly flowing thin film of water which covers substantially the entire surface of the walls of the exhaust air flow passages. The collecting box 23 beneath the heat exchanger cassettes 30 receives both the exhaust air and excess humidifying water and is adapted to serve as a water reservoir. It therefore is connected to a constantly pressurized water supply conduit by way of a float-controlled feed valve (not shown) which maintains a constant level of water in the collecting box. An electrically driven water pump 43 draws water from the collecting box and feeds it to the nozzle feed conduit 41 when the valve 42 is open.

Water is supplied to the exhaust air flow passengers 34 of the heat exhanger 12 under the control of an electrical control and monitoring system (not shown) forming part of the air conditioning installation which comprises the illustrated air conditioning unit. Water may be supplied as desired or required both for humidification of the exhaust air, that is, when cooling of the supply air is required, and for flushing the walls 32, 33 of the exhaust air flow passages 34. Supply of water for the last-mentioned purpose may be combined with water supply for the first-mentioned purpose but may also be effected separating at longer or shorter intervals, depending on the actual or predicted dust content of the exhaust air. Because of the smooth vertical walls of the flow passages 34 for the exhaust air and the positioning of the spray nozzles 40 above, i.e., on the upstream side of, the stack of heat exchanger cassettes 30, an efficient cleaning of the flow passages for exhaust air is ensured, so that the heat exchange is always efficient.

The dust washed away from the walls of the exhaust air flow passages 34 settles in the collecting box 23 and is removed therefrom in connection with maintenance or inspection of the air conditioning unit.

The inlet box 21 is also provided with a second group of spray nozzles (not shown) which are separately connected with the water supply by way of a valve (not shown) controlled by a fire or smoke detector. These additional nozzles constitute a sprinkler arrangement which serves in case of fire to protect the heat exchanger against overheating and the resultant danger of overflow of exhaust air from the exhaust air duct system to the supply air duct system; in the case of a fire the exhaust air may become mixed with smoke and/or poisonous gases, and it is important therefore to avoid such overflow. Because of this protection against overheating it may be possible to dispense with the bypass passage for the exhaust air which the fire protection regulations normally prescribe for the heat exchanger in case the heat exchanger is unable to endure temperatures above 600°C. Therefore, in accordance with the invention, it is possible to construct the heat exchanger from aluminium without having to provide an exhaust air bypass across the heat exchanger.

If the control equipment for the valve 42 is arranged such that in case of fire or excess temperature it automatically opens the valve 42 and starts the pump 43, the above-described protective function may also be realized by means of the spray nozzles 40, their feed conduit 41 and the pump 43. As an alternative, the spray nozzles 40 may have, in addition to their connection with the pump 43, a separate connection with the main water supply conduit including a normally closed valve controlled by a fire or smoke detector.

The humidifier 15 for the supply air also comprises spray nozzles 45 which are positioned at the top of the supply air duct and are connected to a water feed conduit 46, which includes an electrically operated valve (solenoid valve) 47 and is connected to the pump 43. It is thus supplied with water from the same source as the nozzles for the supply of water to the exhaust air flow passages 34. Excess water is collected at the bottom of the humidifier and conveyed through a drain conduit 48 to the collecting box 23. The supply of water to the humidifier 15 is controlled by the above-mentioned control and monitoring system.

The supply air fan section 16 and its fan 17 may be conventional. The outlet of the fan 17 opens into the sound absorber 19 which is a duct section arranged as a diffuser and having its internal surfaces covered with a sound-absorbing material.

The filter 20 is adapted to be disconnected when filtering of the supply air for hygienic reasons is unnecessary, as is normally the case for the major part of the year; an example of a case where filtering of the supply air may be required for hygienic reasons is the pollen season. Thus, the filter is not normally needed except for a relatively short portion of the total operating time of the air conditioning unit. The deactivation or disconnection of the filter 20, which is shown only by way of a non-limiting example, is effected by uncovering a lateral passage upon displacement (in the longitudinal direction of the supply air duct) of a holder 50 which supports a filter element 51 and coacts with a stationary duct element 52.

Displacement of the holder 50 may be accomplished by means of a suitable actuator, such as a conventional damper actuator (not shown) and may be triggered automatically or manually.

The possibility of disconnecting the filter for extended periods without any serious effects resulting from the disconnection is due partly to the fact that the outside air does not normally require filtration for hygienic reason and partly to the fact that filtering is not necessary for protecting the above-described heat exchanger 12, because the heat exchanger has its supply air flow passages 34 defined by surfaces which are smooth in the direction of air flow and which do not, therefore, easily become covered with dust.

The heater 13, which normally need not be energised except in periods in which the temperature of the outside air is low so that the heating by means of the heat exchanger 12 is insufficient, may be conventional. However, its heating surfaces should be smooth in the direction of flow of the air so that dust deposits on them are avoided.

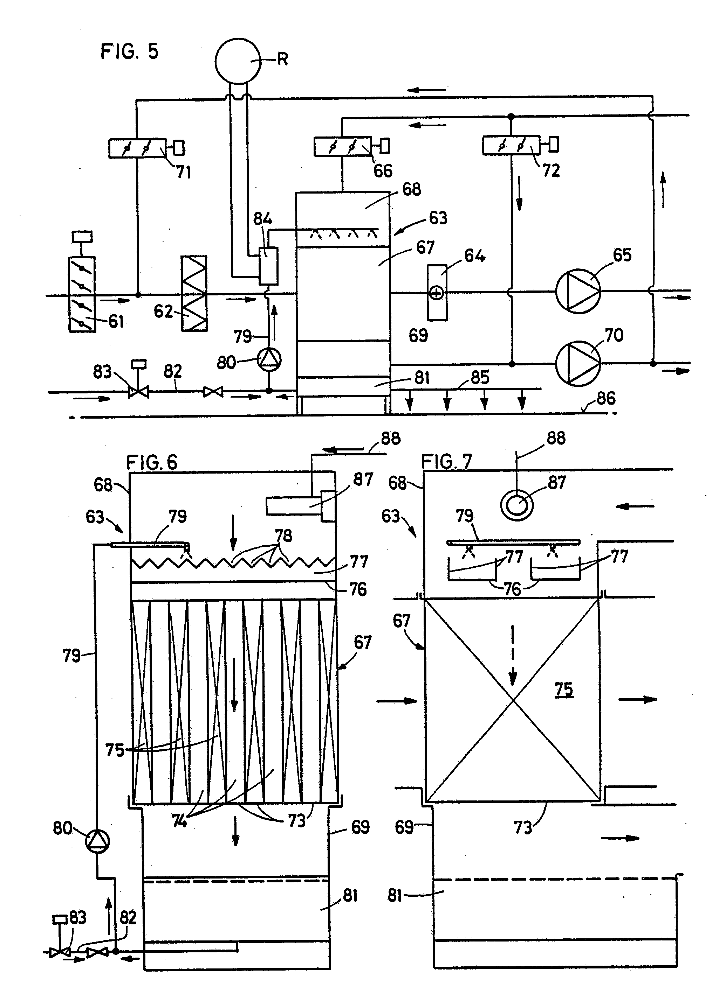

The air conditioning unit shown in Fig. 5 may be used and arranged in the same manner as the unit shown in Figs. 1 to 4.

Outside air to be processed for use as supply air is drawn through a damper 61 and a filter 62 to a plate heat exchanger 63. Apart from the differences apparent from the following description, this heat exchanger is similar to the above-described heat exchanger 12.

After its passage horizontally through the supply air flow passages of the heat exchanger 63, the air passes through a heater 64 and a supply air fan 65 to the space or spaces to be supplied with conditioned air.

The exhaust air passes through an exhaust air damper 66 into an inlet box 68 positioned above the plate stack 67 of the heat exchanger and from there down through the vertical exhaust air passages in the plate stack. Exhaust air emerging from the plate stack 67 is received by a collecting box 69 beneath the plate stack 67 and is drawn from there to an exhaust air fan 70 and discharged to the outside atmosphere. If desired, a portion of the exhaust air discharged from the fan 70 may be passed through a return air damper 71 to the supply air duct upstream of the heat exchanger 63.

If desired, a portion of the exhaust air may be caused to bypass the heat exchanger 63 by means of a bypass damper 72 and flow direct to the exhaust air fan 70.

As in the above-described heat exchanger 12, the plate stack 67 of the heat exchanger 63 comprises a plurality of plate-like flat cassettes 73 disposed in vertical position and side by side with a small distance between adjacent cassettes so that the cassettes define between them a plurality of vertical exhaust air flow passages 74 of uniform widths. Within each cassette 73 the side walls of the cassette define between them a flow passage 75 for the supply air. A folded or corrugated sheet metal strip (not shown) positioned between the cassette walls divides each flow passage 75 into a multiplicity of subpassages which are smooth in the direction of flow of the supply air.

Like the heat exchanger 12 of Figs. 1 to 4 the heat exchanger 63 of Figs. 5 to 7 is provided with means for supplying water to the flow passages 74 for the exhaust air such that the water forms a thin film of water on the flow passage walls which covers substantially the entire wall surface area and flows from the upper or inlet end of the flow passages to the lower or outlet end.

To this end, a pair of parallel horizontal distributor channels 76 which extend across the plate stack 67 are provided directly above the plate stack. The upper edge portions of the sidewalls 77 of the channels 76 are serrated to form a multiplicity of recesses 78 which constitute overflows over which water in the channels 76 flows to be distributed substantially evenly over the length of the upper edges of the walls of the exhaust air flow passages 74 and form a flowing film of water covering substantially the entire area of the walls.

Because the channels 76 cover a portion of the inlet side of the plate stack 67 they also contribute to an even distribution of the exhaust air over the flow passages 74.

Water is supplied to the channels 76 through a feed tube 79 by means of a pump 80. The pump 80 draws water from a tray 81 which is disposed in the collecting box 69 below the plate stack 67 and in which the water emerging from the exhaust air flow passages 74 is collected. A level regulator (not shown) replenishes the tray with water from a cold water conduit 82 which is connected to the water supply mains and includes a solenoid valve 83. Because of the open, unpressurised system for supplying water to the exhaust air flow passages 74, the problems normally associated with spray nozzles are avoided; such nozzles easily become clogged, have to be fed at high pressures which involve sealing problems, and also occupy a considerable space.

Supply of cold water from the conduit 82 may also take place when the heat dissipation from the water flowing through the exhaust air flow passages 74 which is brought about by the exhaust air is insufficient for the desired lowering of the temperature of the supply air (e.g. when the relative humidity of the exhaust air is high).

When the temperature and the relative humidity of the outside air is high, the water can be cooled in a separate heat exchanger 84 associated with a refrigerating machine R before it enters the heat exchanger 63. In such case, the relatively warm exhaust air may be caused by means of the bypass damper 72 to bypass the heat exchanger 63.

When fresh water is supplied for extended periods, a distributor conduit 85 can be used to spread excess water flowing out of the tray 81 over the roof 86 of the building which houses the air conditioning unit. In this way, undesirable heat transmission through the roof into the underlying spaces is counteracted.

As shown in Figs. 6 and 7 a burner, preferably a fuel gas burner 87, connected to a fuel supply conduit 88 is disposed in the inlet box 68 of the heat exchanger 63. This burner 87, which may be conventional and is associated with suitable apparatus (not shown) for igniting and extinguishing it, controlling the fuel supply, etc., is used for heating the exhaust air in the inlet box 68 before it enters the plate stack 67 of the heat exchanger 63, namely when the above-explained additional heating of the supply air is required. The oxygen required for the combustion is taken from the exhaust air but it is within the scope of the invention to supply the combustion air separately.

It is of course possible within the scope of the invention to provide the air conditioning unit of Figs. 1 to 4 or other air conditioning units including a recuperative heat exchanger with a burner similar to the burner 87 of Figs. 6 and 7 to heat the exhaust air before it enters the heat exchanging elements of the heat exchanger. Since the burner is normally used only for short periods and for effecting only relatively small increases of the temperature, it can have small dimensions and be supplied with gas from portable, easily replaceable fuel containers.

## Claims

1. A method for conditioning supply air in respect of its temperature in a recuperative heat exchanger having a first group of flow passages for supply air and a second group of flow passages for exhaust air, the second group of flow passages being disposed in recuperative heat-exchanging relation with the first group of flow passages, the method comprising adding water to the exhaust air when cooling of the supply air is required, **characterised** in that water is supplied direct to the second group of flow passages (34,74) of the heat exchanger (13,63).

2. A method according to claim 1, **characterised in** that the water is supplied by spraying it on the walls (32,33) of the second group of flow passages (34).

3. A method according to claim 1 or 2, **characterised** by forming on the walls (32,33) of the second group of flow passages (34,74) a film of water which covers substantially the entire surface area of the walls and flows in co-current relation with the exhaust air through the second group of flow passages.

4. A method according to claim. 3, **characterised** in that the water is supplied to the walls by gravity feed from distributor channels (76) at the inlet end of the second group of flow passages (74).

5. A method according to any one of claims 1 to 4, **characterised** in that the water is passed through a water cooler (84) before it is supplied to the second group of flow passages (74).

6. A method according to any one of claims 1 to 5, **characterised** in that the water emerging from the second group of flow passages (74) is spread over a roof (86) of a building.

7. A method for conditioning supply air in respect of its temperature in a recuperative heat-exchanger having a first group of flow passages for the supply air, a second group of flow passages for exhaust air, the second group of flow passages being disposed in recuperative heat-exchanging relation with the first group of flow passages, particularly according to any one of Claims 1 to 6, **characterised** in that when heat ing of the supply air is required, the exhaust air is heated immediately before it enters the second group of flow passages (74), the heating being effected by means of a burner (87), preferably a gas burner.

8. A recuperative heat exchanger having a first group of flow passages for supply air and a second group of flow passages for exhaust air, the second group of flow passages being disposed in recuperative heat-exchanging relation with the first group of flow passages, **characterised** by means (40-43, 76-80) for supplying water direct to second group of flow passages (34,74).

9. A heat exchanger according to claim 8, **characterised** in that the first and second group of flow passages (34,74) are defined by flat heat exchanger plates (30,73) and have substantially vertical, parallel walls which are substantially smooth in the direction of flow of respectively the supply air and the exhaust air, and in that water supply means (40,76-78) is provided adjacent the inlet to the second group of flow passages (34,74) for supplying water to the upper end of the walls (32,33) of the flow passages substantially throughout the length of the walls.

10. A heat exchanger according to claim 9, **characterised** in that the water supply means includes at least one open horizontal channel (76) the length of which substantially corresponds to the horizontal dimension of the second group of flow passages (74) in one direction and the sides of which are provided with a plurality of overflows (78) distributed along the length of the channel and disposed substantially directly above the walls of the second group of passages (74).

11. A heat exchanger according to claim 10, **characterised** in that there are at least two channels (76) and that the channels extend transversely of the planes of the walls of the second group of flow passages (74).

12. A heat exchanger accordning to any one of claims 8 to 11, **characterised** by a vessel (23,81) disposed beneath the second group of flow passages (34,74) for collecting water emerging from these passages and by means (41-43, 79-80) connected to the vessel for recirculating collected water to the inlet end of the second group of flow passages.

FIG.1

25

21 40 22

11

12 13 14 15 19 50 52

III III 17 51

41 45

42 46 20

47 16 18

43 48

24 23

FIG. 2

27 28

11 16 18 50 52

K

26 12 13 14 15 19 20

17

FIG. 4

FIG. 3

FIG. 5

FIG. 6

FIG. 7